# EUROPÄISCHE PATENTSCHRIFT

(11) **EP 2 669 149 B1**
(45) Veröffentlichungstag und Bekanntmachung des Hinweises auf die Patenterteilung: **21.02.2018**
(21) Anmeldenummer: 13165410.5
(22) Anmeldetag: 25.04.2013
(51) Int. Cl.: B62D 25/08, B62D 29/04, B32B 5/12, B29C 70/86

(54) **Strukturbauteil für ein Kraftfahrzeug**
Structural component for a motor vehicle
Composant de structure pour un véhicule automobile

(30) Priorität: 31.05.2012 DE 102012010768
(43) Veröffentlichungstag der Anmeldung: 04.12.2013
(73) Patentinhaber: Magna Exteriors (Germany) GmbH, 66280 Sulzbach (DE)
(72) Erfinder: Steinke, Jürgen, 73257 Köngen (DE); Mohr, Robert, 71384 Weinstadt (DE)
(74) Vertreter: Rausch, Gabriele

(56) Entgegenhaltungen:
- EP-A1- 1 112 915
- EP-A1- 1 581 380
- EP-A1- 2 028 082
- WO-A1-99/52703
- WO-A1-03/008256
- DE-A1- 3 535 272
- DE-A1- 10 205 965
- DE-A1- 10 332 969
- DE-A1-102008 026 977
- DE-U1-202006 019 341

## Beschreibung

Die Erfindung betrifft ein Strukturbauteil für ein Kraftfahrzeug nach der Art von Anspruch 1.

In modernen Kraftfahrzeugen sind der Kühlergrill und die dahinter liegenden Nebenaggregate wie bspw. der Wärmetauscher der Motorkühlung nicht unmittelbar an der Fahrzeugstruktur angebracht sondern an einer daran befestigten Tragstruktur, die typisch als Montageträger bezeichnet wird. Dies hat den an sich bekannten Vorteil, dass unterschiedliche Motorvarianten mit unterschiedlichen Nebenaggregaten ohne eine Änderung der Fahrzeugstruktur realisiert werden können. Außerdem vereinfacht der Montageträger die Vormontage des Kühlermoduls und kann bei geeigneter Auslegung gegenüber einer unmittelbaren Anbindung auch Gewicht einsparen. Bekannte Montageträger sind aus den amtlichen Druckschriften DE 10 2008 026 977 A1 und DE 10 2010 012 123 A1 bekannt. Insbesondere aus dem zuerst genannten Dokument geht hervor, wie der Montageträger mit der Fahrzeugstruktur in gebräuchlicher Weise verbunden wird.

Aus der genannten DE 10 2008 026 977 A1 ist bekannt, den Montageträger aus Kunststoff zu fertigen, was neben einem Ersparnis an Gewicht auch Vorteile in der Herstellung bringt.

Aus den vorangehend zitierten Dokumenten geht weiterhin hervor, dass die gebräuchlichen Montageträger unter Kostenaspekten vorteilhaft im Spritzgießverfahren aus faserverstärktem Kunststoffmaterial hergestellt werden. Zudem wird dort und in dem weiteren Dokument DE 20 2006 019 341 U1 beschrieben, dass in das spritzgegossene Kunststoffmaterial der konventionellen Montageträger an stark beanspruchten Stellen Blechstrukturen oder Zuschnitte aus sog. Organoblech als Verstärkungen eingebettet sein können. Als Organoblech wird dabei ein mit einem thermoplastischen Kunstharz getränktes textiles Flächengebilde bezeichnet. Insbesondere kann es sich bei dem Flächengebilde um ein Gewebe oder Vlies aus Natur, Karbon-, Glas- oder Mineralfasern handeln. Die thermoplastische Eigenschaft des Kunstharzes bewirkt, dass die dadurch gebildete Matrix durch Erwärmen erweichbar ist und sich das im Lieferzustand typisch flache Organoblech nach dem Erwärmen auf die Erweichungstemperatur durch Pressen in eine profilierte Form umformen lässt. Wie der Name des Ausgangsmaterials andeutet, besteht in der Verarbeitung und den damit erreichbaren Formen eine Ähnlichkeit mit dem Ziehen oder Umformen von Metallblechen.

Die DE10332969 A1 offenbart einen Modulträger aus Faserverbund Kunststoff. Dieser Modulträger wird pressgeformt und besteht zumindest teilweise aus Gewebeschichten. Das gesamte Bauteil wird mit einer Endlosfaser -Gewebeschicht verstärkt und enthält je nach Anforderung zusätzliche Verstärkungen mit Fasereinlagen. Aus der DE 10205965 ist ein Konstruktionselement aus faserverstärktem Kunststoff bekannt. Das Element besteht aus einem mehrschichtigen Aufbau mit unterschiedlichen Fasertypen und unterschiedlichen Faserorientierungen. Dabei weist das Element einen hohlen Kern auf. Die Bauteile sind dabei immer mit einfachem Kunststoff umspritzt.

Aus der EP1581380A1 ist ein gattungsgemäßes Strukturbauteil bekannt.

Die Aufgabe der vorliegenden Erfindung besteht darin, ein Strukturbauteil in gegenüber den bekannten Ausführungen verbesserter Ausführung zu schaffen.

Diese Aufgabe wird gelöst durch die Merkmale von Anspruch 1. Weiterbildungen ergeben sich aus den Unteransprüchen.

Gemäß der Erfindung ist ein Strukturbauteil für ein Kraftfahrzeug vorgesehen, in Form eines im Front- oder Heckbereich des Fahrzeuges montierbaren Montageträgers, wobei das Strukturbauteil aus Kunststoff mit integrierten Verstärkungsteilen, bzw. Einlegteile (8) als ein Formteil gefertigt ist und wenigstens in Teilbereichen Einlegteile (8) mit zwei oder mehrere Gewebelagen (GF, CF) aufweist, welche mit einem thermoplastischen Kunststoff (KU) umspritzt sind, der einen Anteil Glasfasern aufweist, wobei die aufeinander folgenden Gewebelagen bezüglich der Winkel (α) zwischen den Kett- und Schussfäden (K, S) unterschiedlich sind, wobei die dreiteiligen Einleger des Obergurts des Montageträgers durch ein linkes und rechtes Seitenteil (5) sowie ein Mittelteil (4) gebildet ist und die Seitenteile (5) als Schichtaufbau lediglich Glasfaserlagen (GF) aufweisen und das Mittelteil (4) als Schichtaufbau in einer Materialkombination von äußeren Lagen aus Glasfaser (GF) und der mittleren Lage aus Carbonfaser (CF) ausgeführt ist.

Das Strukturbauteil besitzt Einleger mit drei mit einem thermoplastischen Kunststoff umspritzte Gewebelagen. Als thermoplastischer Kunststoff wird bevorzugt PA 6 GF35 (Polyamid 6 mit 35 % Glasfaser) verwendet. Alternativ können auch andere Materialien der Umspritzung dienen, z.B. PP, PA-jeweils mit Füllstoff.

Einzelne Gewebelagen bestehen aus dem gleichen Material, bspw. Glasfaser oder Carbonfaser. Je nach vorgesehener Festigkeit werden auch unterschiedliche Lagen verarbeitet - im Wechsel GF, Carbon. Letztlich ist es auch vorgesehen, dass Gewebelagen gleichen Materials in unterschiedlicher Faserorientierungen verarbeitet werden, wobei bei aufeinander folgenden Gewebelagen die Kett-Schusswinkel unterschiedlich gewählt sind. Das erfindungsgemäße Strukturbauteil weist an den einzelnen Teilen einen unterschiedlichen Aufbau auf. So können die Festigkeitsanforderungen gezielt erfüllt werden, gleichzeitig wird an weniger strapazierten Stellen Material und somit Gewicht eingespart. Die zu wählende GF / CFK Kombination wird auf Basis einer vorherigen Festigkeitssimulation errechnet.

Die unterschiedlich gewählten und gestalteten GF / CFK Einlegteile ermöglichen einen Leichtbau unter vollständigen Verzicht auf Metallteile. Dadurch entfällt insbesondere eine sonst vorzusehende Korrosionsschutzbeschichtung. Letztlich bringt ein metallfreier Aufbau auch eine Verbesserung im elektromagnetischen verhalten - durch die fehlende Wechselwirkung werden bspw. in der Fahrzeugfront angeordnete Sensoren weniger gestört bzw. können mit geringerer Leistung arbeiten. Insgesamt ergibt sich so eine für die Fahrzeugsensorik günstigere Umgebung.

Des Weiteren erfolgt die Erläuterung eines Ausführungsbeispiels der Erfindung an Hand der Zeichnungen.

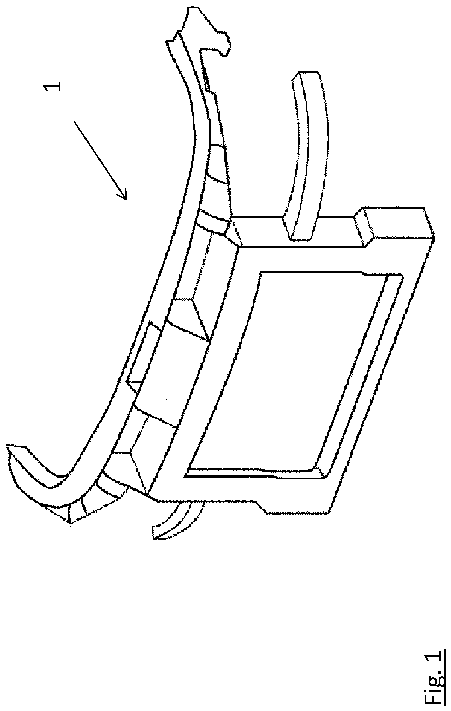

Figur 1 zeigt in perspektivischer Ansicht einen Montageträger 1 für die Fahrzeugfront eines nicht weiter dargestellten Kraftfahrzeuges. Der gezeigte, einteilig ausgeführte Montageträger 1 besteht aus Kunststoff mit integrierten Verstärkungsteilen, und zwar ohne jegliche metallischen Einlegteile. Ersichtlich setzt sich der in einem Stück gefertigte Montageträger 1 aus einem Rahmenteil 2, einem oberen Querteil, welches sich oben an das Rahmenteil anschließt und zwei etwa mittig von dem Rahmenteil in beiden Richtungen abgehenden Streben, zusammen. Der in der Figur 1 wiedergegebene Montageträger ist hierbei in seiner Gesamtheit dargestellt, d.h. mit sämtlichen noch näher gezeigten Verstärkungs- bzw. Einlegteilen.

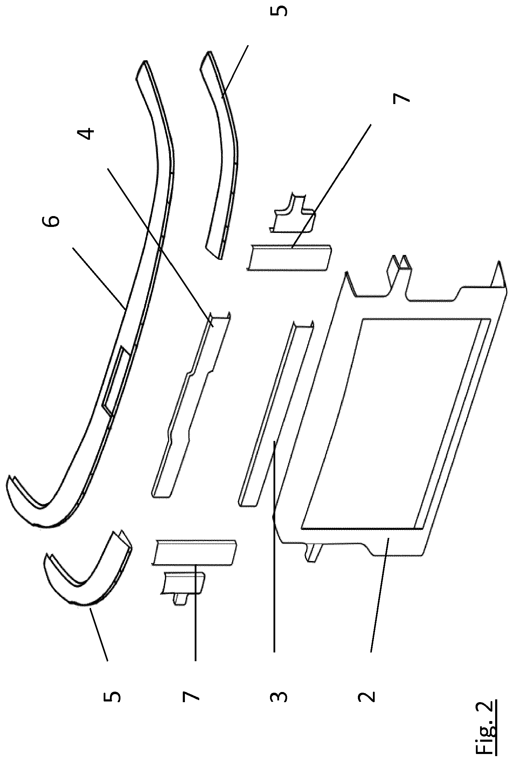

In Figur 2 sind die einzelnen Einlegteile für den Montageträger nach Figur 1 dargestellt. Verstärkt bzw. als Einlegteil ausgeführt ist das Rahmenteil 2, der Untergurt 3, das Mittelteil des Obergurtes 4, die beiden Seitenteile 5_(links, rechts) des Obergurtes, der einteilige Obergurt 6, der oberhalb des Mittelteils des Obergurts vorhanden ist, sowie die seitlich am Rahmenteil links und rechts sitzenden Vertikalstreben 7. Die genannten Teile, die Einlegteile werden in eine der Form des fertigen Montageträgers 1 (Figur 1) entsprechende Form eingelegt und verspritzt bzw. in ein vorgefertigtes Kunststoffteil eingesetzt und mit diesem Teil mittels Verspritzen verbunden.

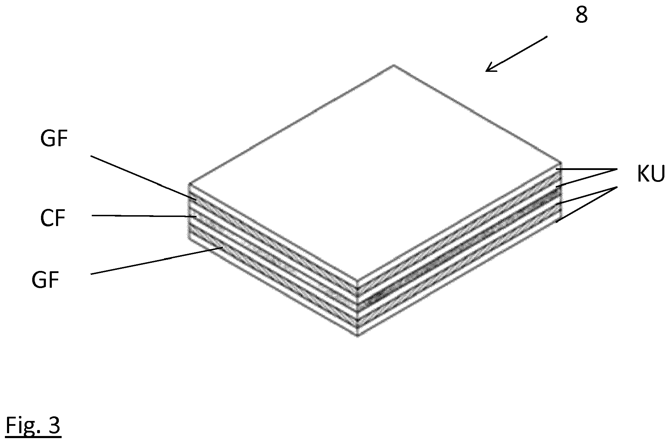

Figur 3 zeigt den Schichtaufbau eines Einlegteils 8 als Schnitt. Im gezeigten Beispiel ist das Einlegteil durch drei Gewebelagen gebildet, welche mit thermoplastischen Kunststoff (bspw. PA 6 GF35) in insgesamt vier Schichten KU umspritzt sind. Die obere und die untere Gewebelage ist aus Glasfaser GF, die mittlere Lage aus Carbonfaser CF gebildet. Zwischen diesen Lagen sowie die obere und die untere Lage abschließend ist je eine Schicht des thermoplastischen Kunststoffes KU angeordnet.

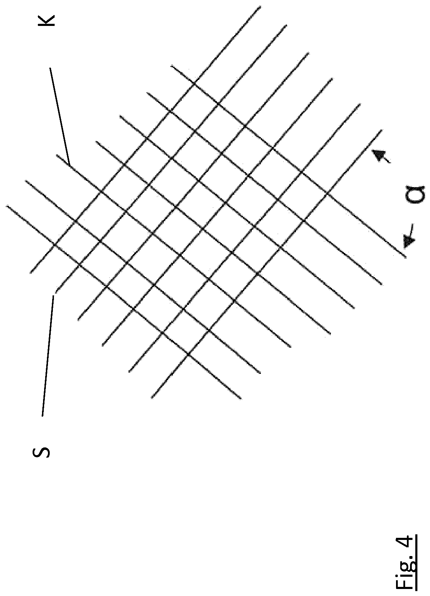

In Figur 4 ist die relative Orientierung der Kett- und Schussfäden K, S zueinander dargestellt. Üblich ist hierbei, dass die Winkel α zwischen Kett- und Schussfäden K, S 90° beträgt, wobei auch ein Gewebe mit einem von 90° abweichender Winkel zwischen den Kett- und Schussfäden K, S verwendet wird. Mit Blick auf den in der Figur 3 gezeigten Schichtaufbau ist es der Aufbau so, dass die Winkel zwischen den Kett- und Schussfäden K, S in den aufeinander folgenden Gewebelagen unterschiedlich sind. Dies erfolgt mit dem Ziel, die anisotropen Materialeigenschaften der einzelnen Gewebelagen in der Gesamtheit zu homogenisieren bzw. um an bestimmten Stellen - bspw. mit Blick auf eine vorzusehende Deformationsrichtung im Crashfall - eine Vorzugsrichtung für Steifigkeit, eine Sollbiegestelle zu erzeugen.

Die in der Figur 2 gezeigten Einlegteile können gemäß den vorgegebenen Anforderungen wie nachfolgend beschrieben ausgeführt sein.

Die dreiteiligen Einlegteile des Obergurts sind durch je ein linkes und ein rechtes Seitenteil 5 sowie ein Mittelteil 4 gebildet. Die Seitenteile 5 weisen als Schichtaufbau lediglich Glasfaserlagen GF auf - das Mittelteil 4 ist als Schichtaufbau in einer Materialkombination ausgeführt. Die äußeren Lagen sind Glasfaser GF, die mittlere Lage Carbonfaser CF.

Der einteilige Obergurt 6, der oberhalb des Mittelteils des Obergurts vorhanden ist, ist ein-teilig ausgeführt. Alle Teile sowie die Vertikalstreben 7 bestehen aus einer Materialkombination Glasfaser GF - Carbonfaser CF, und zwar unterschiedlich variiert hinsichtlich Schichtdicke und Schichtreihenfolge.

Die Einlegteile des Montageträgers 1 können im Schichtaufbau komplett aus Carbonfaser CF oder aus Glasfaser GF bestehen. Letztlich können die verschiedenen Einlegteile auch - wie zuvorstehend beschrieben - in unterschiedlicher Weise ausgeführt sein, solange der Gesamtgegenstand des Montageträgers alle MErkmale des Anspruchs 1 aufweist, wessen Anspruch weiterhin den Umfang der Erindung definiert.

### Bezugszeichen

- 1: Montageträger
- 2: Rahmenteil
- 3: Untergurt
- 4: Mittelteil Obergurt
- 5: Obergurt Seitenteile
- 6: einteiliger Obergurt

- 7: Vertikalstrebe
- 8: Einlegteil
- GF: Glasfaser
- CF: Carbonfaser
- KU: Kunststoffumspritzung, thermoplastischer Kunststoff
- S: Schussfaden, Schussrichtung
- K: Kettfaden, Kettrichtung

## Patentansprüche

1. Strukturbauteil für ein Kraftfahrzeug in Form eines im Front- oder Heckbereich des Fahrzeuges montierbaren Montageträgers, wobei das Strukturbauteil aus Kunststoff mit integrierten Verstärkungsteilen, bzw. Einlegteile (8) besteht und als ein Formteil gefertigt ist und wenigstens in Teilbereichen Einlegteile (8) mit zwei oder mehrere Gewebelagen (GF, CF) aufweist, welche mit einem thermoplastischen Kunststoff (KU) umspritzt sind, der einen Anteil Glasfasern aufweist, wobei die aufeinander folgenden Gewebelagen der Einlegteile bezüglich der Winkel (α) zwischen den Kett- und Schussfäden (K, S) unterschiedlich sind, **dadurch gekennzeichnet, dass** die dreiteiligen Einleger des Obergurts des Montageträgers durch ein linkes und rechtes Seitenteil (5) sowie ein Mittelteil (4) gebildet sind und die Seitenteile (5) als Schichtaufbau lediglich Glasfaserlagen (GF) aufweisen und das Mittelteil (4) als Schichtaufbau in einer Materialkombination von äußeren Lagen aus Glasfaser (GF) und der mittleren Lage aus Carbonfaser (CF) ausgeführt ist.

2. Strukturbauteil nach Anspruch 1,
bei dem die Gewebelagen(GF, CF) in der Materialdicke unterschiedlich sind.

3. Strukturbauteil nach einem der vorhergehenden Ansprüche,
bei dem der die Gewebelagen (GF, CF) umgebende Kunststoff (KU) auf Basis eines Polyamid ist.

## Claims

1. Structural component for a motor vehicle in the form of a mounting bracket which is mountable in the front or rear region of the vehicle, wherein the structural component is made of plastic having integrated reinforcement parts or insert parts (8) and is manufactured as a moulded part, and which comprises in at least partial regions insert parts (8) having two or more woven fabric layers (GF, CF) which are overmoulded with a thermoplastic polymer (KU) which comprises a proportion of glass fibres, wherein the sequential woven fabric layers of the insert parts are dissimilar in terms of the angle (α) between the warp and weft threads (K, S), **characterized in that** the three-part inserts of the upper belt of the assembly support are formed by a left and a right lateral part (5) and by a central part (4), and the lateral parts as a tiered construction comprise only glass fibre layers (GF), and the central part (4) is embodied as tiered construction in a material combination of external layers from glass fibre (GF) and of the central layer from carbon fibre (CF).

2. Structural component according to Claim 1, wherein
the woven fabric layers (GF, CF) differ in their material thickness.

3. Structural component according to one of the preceding claims, wherein the polymer (KU) surrounding the woven fabric layers (GF, CF) is based on a polyamide.

## Revendications

1. Composant de structure pour un véhicule automobile sous la forme d'un support de montage pouvant être monté dans la région avant ou arrière du véhicule, le composant de structure étant constitué de plastique avec des pièces de renfort intégrées ou des pièces d'insertion (8) et étant fabriqué en tant que pièce moulée et présentant, au moins dans des régions partielles, des pièces d'insertion (8) avec deux ou plus de deux couches de tissu (GF, CF) qui sont surmoulées avec un plastique thermoplastique (KU) qui présente une proportion de fibres de verre, les couches de tissu successives des pièces d'insertion étant différentes en termes de l'angle (α) entre les fils de chaîne et les fils de trame (K, S), **caractérisé en ce que** les dispositifs d'introduction en trois parties de la sangle supérieure du support de montage sont formés par une partie latérale gauche et une partie latérale droite (5) ainsi qu'une partie centrale (4) et les parties latérales (5) présentent, en tant que construction stratifiée, seulement des couches de fibres de verre (GF) et la partie centrale (4) étant réalisée sous forme de construction stratifiée en une combinaison de matériaux de couches extérieures en fibres de verre (GF) et de la couche centrale en fibres de carbone (CF).

2. Composant de structure selon la revendication 1, dans lequel les couches de tissu (GF, CF) sont différentes en termes d'épaisseur de matériau.

3. Composant de structure selon l'une quelconque des revendications précédentes, dans lequel le plastique (KU) entourant les couches de tissu (GF, CF) est à base d'un polyamide.
